(19) Europäisches Patentamt
European Patent Office
Office européen des brevets

(11) **EP 4 261 239 A1**

(12) **EUROPEAN PATENT APPLICATION**

(43) Date of publication:
**18.10.2023 Bulletin 2023/42**

(21) Application number: **23165595.2**

(22) Date of filing: **30.03.2023**

(51) International Patent Classification (IPC):
***C08F 212/08*** *(2006.01)* ***C08F 212/12*** *(2006.01)*
***C08F 212/36*** *(2006.01)* ***C08F 232/04*** *(2006.01)*
***C08F 232/06*** *(2006.01)* ***C09D 125/08*** *(2006.01)*
***C09D 125/16*** *(2006.01)* ***C09D 145/00*** *(2006.01)*
*B32B 15/082 (2006.01)* *B32B 27/30 (2006.01)*
*B32B 27/32 (2006.01)*

(52) Cooperative Patent Classification (CPC):
(C-Sets available)
**C08F 212/08; B32B 5/02; B32B 7/12; B32B 15/14; B32B 15/20; B32B 17/02; C08F 212/12; C08F 212/36; C08F 232/04; C09D 125/08; C09D 125/16; C09D 145/00;** B32B 2250/42; B32B 2260/021; B32B 2260/046; (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.04.2022 US 202263330456 P**
**19.01.2023 TW 112102663**

(71) Applicant: **LCY Chemical Corp.**
**Kaohsiung City 812 (TW)**

(72) Inventors:
- **HSU, Yu-Chen**
  **812 Kaohsiung City (TW)**
- **AU-YEUNG, Ka-Chun**
  **812 Kaohsiung City (TW)**
- **LIAO, Ming-Hung**
  **812 Kaohsiung City (TW)**
- **Tang, Yi-Hsuan**
  **812 Kaohsiung City (TW)**
- **Chen, Chien-Han**
  **812 Kaohsiung City (TW)**
- **Chen, Yu-Tien**
  **812 Kaohsiung City (TW)**
- **Lin, Yu-Pin**
  **812 Kaohsiung City (TW)**
- **Fan, Gang-Lun**
  **812 Kaohsiung City (TW)**

(74) Representative: **Fuchs Patentanwälte Partnerschaft mbB**
**Tower 185**
**Friedrich-Ebert-Anlage 35-37**
**60327 Frankfurt am Main (DE)**

# (54) HYDROCARBON RESIN POLYMER, PREPARATION METHOD THEREOF, AND COMPOSITION AND SUBSTRATE COMPRISING THE SAME

(57) A hydrocarbon resin polymer is provided. The hydrocarbon resin polymer includes: 0.15-15 mol% of repeating units (A), which are derived from bridged ring monomer compounds; 15-90 mol% of repeating units (B), which are derived from monovinyl aromatic compounds; and 8-80 mol% of repeating units (C), which are derived from divinyl aromatic compounds.

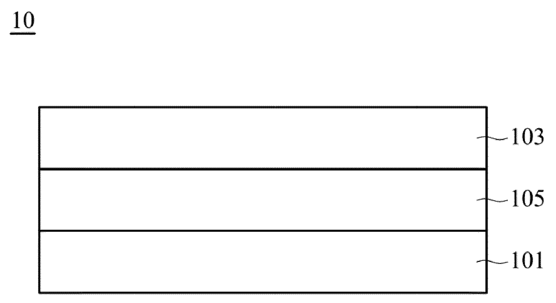


Figure 1

(52) Cooperative Patent Classification (CPC): (Cont.)
B32B 2262/101

C-Sets
**C08F 212/08, C08F 212/36, C08F 232/06, C08F 212/12;**
**C08F 212/08, C08F 232/04, C08F 212/36, C08F 212/12;**
**C08F 212/08, C08F 232/06, C08F 212/36, C08F 212/12;**
**C08F 212/12, C08F 232/06, C08F 212/36, C08F 212/12;**
**C08F 212/36, C08F 212/08, C08F 232/06, C08F 212/12;**
**C08F 232/04, C08F 212/08, C08F 212/36**

## Description

### CROSS REFERENCE TO RELATED APPLICATIONS

This application claims the benefit of U.S. Provisional Application No. 63/330, 456 filed April 13, 2022 and Taiwan Application No. 112,102,663, filed on January 19, 2023, the entirety of which is incorporated by reference herein.

### BACKGROUND OF THE INVENTION

#### Field of the Invention

The present invention relates to a resin polymer, a preparation method thereof, and a composition and a substrate including the same, and, in particular, it relates to a hydrocarbon resin polymer, a preparation method thereof, and a composition and a substrate including the same.

#### Description of the Related Art

5th generation mobile networks technology (5G mobile networks for short) is the latest generation of mobile communication technology. 5G mobile communication technology has the characteristics of high-speed transmission, wide connection, and low latency. 5G mobile communication technology can be divided into three types, depending on the frequency band used: high-frequency 5G, intermediate-frequency 5G, and low-frequency 5G.

High-frequency 5G can provide ultra-high connection rates. However, the signal emission and reception quality of high-frequency 5G will be affected by high-frequency path loss, conductor loss, and dielectric loss during the signal transmission process. The dielectric loss is directly related to the packaging material. Therefore, it is necessary to develop packaging materials with low dielectric loss to reduce the dielectric loss of high-frequency 5G in the transmission process, thereby improving the signal emission and reception quality.

Reducing dielectric loss can be achieved by reducing the dielectric properties (dielectric constant (Dk) and the dielectric loss tangent (Df)) of the packaging materials. Hydrocarbon resins or polyolefin materials composed of carbon atoms and hydrogen atoms have low dielectric loss characteristics due to the small number of polar functional groups. However, hydrocarbons are susceptible to oxidation due to heating processes during the manufacturing process. The electrical properties of the oxidized hydrocarbon resin will deteriorate (i.e., the dielectric constant and the dielectric loss tangent will be increased).

### BRIEF SUMMARY OF THE INVENTION

In view of the above problems, the disclosure provides a hydrocarbon resin polymer having good thermal properties (high glass transition temperature (Tg)), good solubility, good processability, cost-effectiveness, and good electrical performance. The hydrocarbon resin polymer of the disclosure has good electrical performance and good thermal properties after heating processes. That is, the hydrocarbon resin polymer of the disclosure has good thermal stability.

An embodiment of the disclosure provides a hydrocarbon resin polymer including: 0.15-15 mol% of repeating units (A), which are derived from bridged ring monomer compounds; 15-90 mol% of repeating units (B), which are derived from monovinyl aromatic compounds; and 8-80 mol% of repeating units (C), which are derived from divinyl aromatic compounds.

An embodiment of the disclosure provides a preparation method of a hydrocarbon resin polymer, including: providing 15-50 mol% of bridged ring monomer compounds; providing 38-80 mol% of monovinyl aromatic compounds; providing 2-45 mol% of divinyl aromatic compounds; and polymerizing the bridged ring monomer compounds, the monovinyl aromatic compounds, and the divinyl aromatic compounds to form the hydrocarbon resin polymer.

An embodiment of the disclosure provides a resin composition including a hydrocarbon resin polymer. The hydrocarbon resin polymer includes: 0.15-15 mol% of repeating units (A), which are derived from bridged ring monomer compounds; 15-90 mol% of repeating units (B), which are derived from monovinyl aromatic compounds; and 8-80 mol% of repeating units (C), which are derived from divinyl aromatic compounds.

In addition, an embodiment of the disclosure provides a substrate including a hydrocarbon resin polymer. The hydrocarbon resin polymer includes: 0.15-15 mol% of repeating units (A), which are derived from bridged ring monomer compounds; 15-90 mol% of repeating units (B), which are derived from monovinyl aromatic compounds; and 8-80 mol% of repeating units (C), which are derived from divinyl aromatic compounds.

## BRIEF DESCRIPTION OF THE DRAWINGS

The present invention can be more fully understood by reading the subsequent detailed description and examples with references made to the accompanying drawings, wherein:
Figure 1 is a schematic diagram of a substrate in according to an embodiment of the disclosure.

## DETAILED DESCRIPTION OF THE INVENTION

It will be further understood that the terms "comprises," and/or "includes" when used herein, specify the presence of stated features, integers, steps, operations, elements, components and/or groups thereof, but do not preclude the presence or addition of one or more other features, integers, steps, operations, elements, components and/or groups thereof. As used herein, the singular forms "a," "an" and "the" are intended to include the plural forms as well, unless the context clearly indicates otherwise.

It will be understood that, although the terms first, second, etc. are be used herein to describe various elements, components, regions, layers and/or portions, these elements, components, regions, layers and/or portions should not be limited by these terms. These terms are used to distinguish one elements, components, regions, layers or portions from another elements, components, regions, layers or portions, but not to imply a required sequence of elements.

It will be understood that, the term "about", "approximate", "rough" as used herein usually indicates a value of a given value or range that varies within 20%, preferably within 10%, and preferably within 5%, or within 3%, or within 2%, or within 1%, or within 0.5%. The value given here are approximate value, i.e., "about", "approximate", or "rough" may be implied without specifying "about", "approximate", or "rough". It will be further understood that the values indicated in herein may include the said values as well as deviation values that are within an acceptable deviation range for people having general knowledge in art. It will be understood that the expression "a-b" used herein to indicate a specific range of values is defined as "$\geqq$a and $\leqq$b".

Unless otherwise defined, all terms (including technical and scientific terms) used herein have the same meaning as commonly understood by a person skilled in the art to which the invention pertains. It will be further understood that terms, such as those defined in commonly used dictionaries, should be interpreted as having a meaning consistent with the relevant technology and the context or background of this disclosure and will not be interpreted in an idealized or overly formal sense unless expressly so defined herein. Descriptions of known functions and constructions that may unnecessarily obscure the present disclosure will be omitted below.

The term "$C_{1-20}$ alkyl group" used herein refers to a linear, branched, or cyclic aliphatic hydrocarbon monovalent group having 1 to 20 carbon atoms in the main carbon chain. Examples of the $C_{1-20}$ alkyl group include, but are not limited to, a methyl group, an ethyl group, a propyl group, an iso-butyl group, a sec-butyl group, a tert-butyl group, a pentyl group, an iso-amyl group, a hexyl group, a decyl group, a dodecyl group, a cyclohexyl group, a cyclooctyl group, and a cyclododecyl group.

The term "$C_{2-20}$ alkenyl group" used herein refers to a linear, branched, or cyclic aliphatic hydrocarbon monovalent group having 2 to 20 carbon atoms and at least one carbon-carbon double bond in the main carbon chain. Examples of the $C_{2-20}$ alkenyl group include, but are not limited to, an ethenyl group, a propenyl group, an isobutenyl group, a sec-butenyl group, a tert-butenyl group, apentenyl group, an isopentenyl group, a hexenyl group, a decenyl group, a dodecenyl group, a pentadecenyl group, a cyclohexenyl group, a cyclooctenyl group, a cyclopentenyl group, a cyclopentadienyl group, and a cyclopentadecenyl group.

The term "carboxylate group having $C_{1-20}$ alkyl chain group" used herein refers to a group having a structure of:

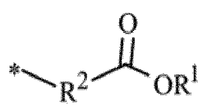
,

in which "*" represents a connecting site that connects other groups, $R^1$ represents a $C_{1-20}$ alkyl group, $R^2$ represents a single bond or a $C_{1-20}$ alkyl group, and the sum of the number of carbon atoms in the main carbon chain of the alkyl groups of $R^1$ and $R^2$ is 1-20.

An embodiment of the disclosure provides a hydrocarbon resin polymer including: 0.15-15 mol% of repeating units (A), which are derived from bridged ring monomer compounds; 15-90 mol% of repeating units (B), which are derived from monovinyl aromatic compounds; and 8-80 mol% of repeating units (C), which are derived from divinyl aromatic compounds.

The term "bridged ring monomer compounds" used herein refers to compounds that have bridged ring structures and can be polymerized with the same compounds or different compounds to form polymers. The bridged ring structure

refers to a structure having at least two carbocycles, and the at least two carbocycles share two carbon atoms that are not directly connected. In some embodiments, the bridged ring structure in the bridged ring monomer compound may include 3-12 ring atoms and 1-2 double bonds. In some embodiments, the bridged ring structure can be unsubstituted. In some embodiments, at least one hydrogen atom on the bridged ring structure can be substituted by at least one substituent selected from a group consisting of a $C_{1-20}$ alkyl group, a $C_{2-20}$ alkenyl group, and a carboxylate group having $C_{1-20}$ alkyl chain group. In some embodiments, the bridged ring structure may have at least two substituents. The at least two substituents may be any two substituents selected from a group consisting of a $C_{1-20}$ alkyl group, a $C_{2-20}$ alkenyl group, and a carboxylate group having $C_{1-20}$ alkyl chain group. Adjacent substituents among the at least two substituents may together form a ring. Examples of the bridged ring monomer compounds may include, but are not limited to, a norbornene (NB), a dicyclopentadiene (DCPD), a dicycloheptadiene (NBD), a 2-acetyl-5-norbornene, a 5-acetyl-2-norbornene, a methyl 5-norbomene-2-carboxylate, a vinyl norbornene, and an ethylidene-norbornene.

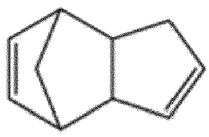

dicyclopentadiene (DCPD)

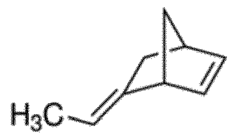

ethylidene-norbornene

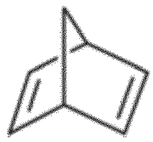

dicycloheptadiene (NBD)

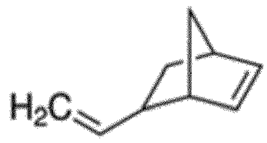

vinyl norbornene

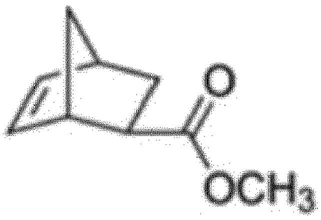

methyl 5-norbornene-2-carboxylate

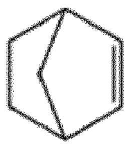

norbornene (NB)

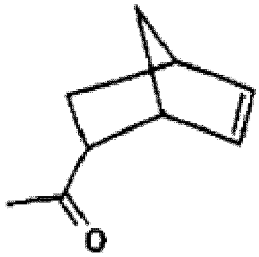

5-acetyl-2-norbornene

The repeating unit (A) derived from a bridged ring monomer compound includes the bridged ring structure from the bridged ring monomer compound. Therefore, the repeating unit (A) may include a bridged ring structure including 3-12 ring atoms and 0-1 double bonds. In some embodiments, the repeating unit (A) may have the following structure, but the disclosure is not limited thereto:

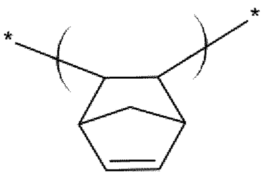
,
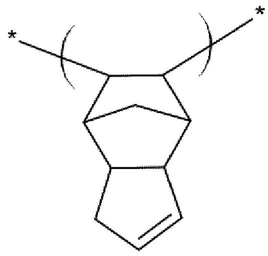
,
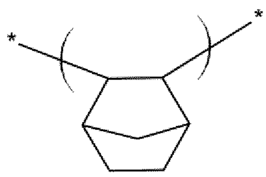
,
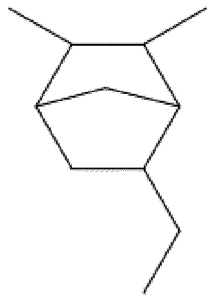
,
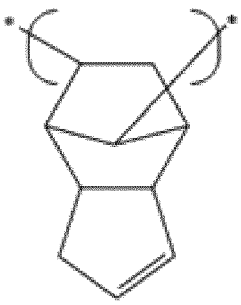
,
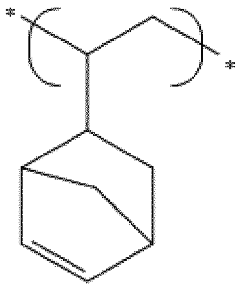
,
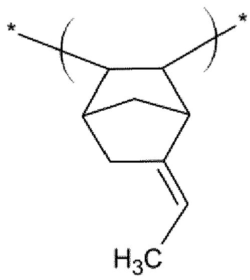
,
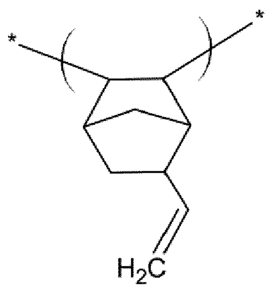
,
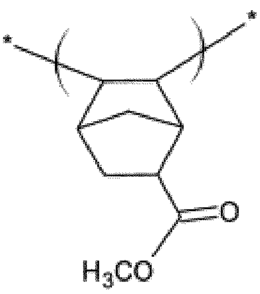
,
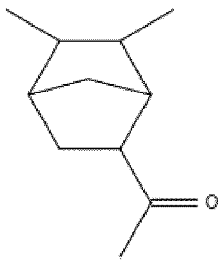
,
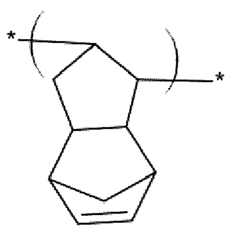
,

or

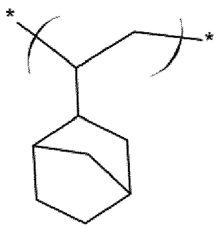

.

In the above structures, "*" represents a connecting site that connects other groups. Compared with linear repeating units, the repeating units (A) having the bridged ring structures have higher rigidity. Therefore, it can increase the glass transition temperature of the hydrocarbon resin polymer or improve the thermal performance of the hydrocarbon resin polymer. When the content of the repeating units (A) in the hydrocarbon resin polymer is too low, for example, less than 0.5 mol%, the hydrocarbon resin polymer cannot have desired thermal properties. When the content of the repeating units (A) in the hydrocarbon resin polymer is too high, for example, above 15 mol%, the cost-effectiveness of the hydrocarbon resin polymer will be reduced. In some embodiments, the hydrocarbon resin polymer of the present disclosure may include 1-14 mol%, 2-13 mol%, 3-12 mol%, 4-10 mol%, or 6-8 mol% of the repeating units (A). In some embodiments, the hydrocarbon resin polymer of the disclosure may include 5 mol%, 7 mol%, or 9 mol% of the repeating units (A).

The term "monovinyl aromatic compound" used herein refers to a compound including a carbocyclic aromatic structure, and one hydrogen on a ring carbon atom of the carbocyclic aromatic structure is substituted by a vinyl group. In some embodiments, the vinyl group may be unsubstituted. In some embodiments, at least one hydrogen atom on the vinyl group may be substituted by a $C_{1-20}$ alkyl group. In some embodiments, the carbocyclic aromatic structure may include 6-60 or 6-20 ring carbon atoms. In some embodiments, the carbocyclic aromatic structure may be unsubstituted. In some embodiments, at least one hydrogen on the ring carbon atom in the carbocyclic aromatic structure may be substituted by a $C_{1-20}$ alkyl group. Examples of the monovinyl aromatic compound may include, but are not limited to, a styrene, a methylstyrene, or an ethylstyrene.

The repeating unit (B) derived from a monovinyl aromatic compound includes the carbocyclic aromatic structure from the monovinyl aromatic compound. For example, in some embodiments, the repeating unit (B) may have the following structure, but the disclosure is not limited thereto:

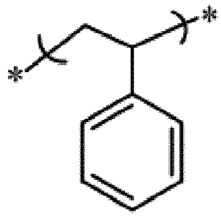 , 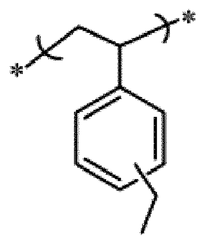 , or 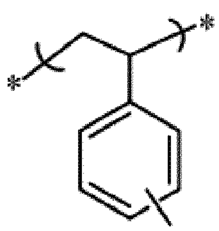 .

In the above structures, "*" represents a connecting site that connects other groups. The repeating unit (B) can increase the solubility of the hydrocarbon resin polymer in solvents such as toluene. When the content of the repeating units (B) in the hydrocarbon resin polymer is too low, for example, less than 15 mol%, the solubility of the hydrocarbon resin polymer in the solvent is poor. When the content of the repeating units (B) in the hydrocarbon resin polymer is too high, for example, higher than 90 mol%, other properties of the hydrocarbon resin polymer, such as its thermal properties, may deteriorate. In some embodiments, the hydrocarbon resin polymer of the disclosure may include 20-90 mol%, 25-85 mol%, 30-80 mol%, 35-75 mol%, 40-70 mol%, or 45-65 mol % of repeating units (B). In some embodiments, the hydrocarbon resin polymer of the disclosure may include 50 mol%, 55 mol%, or 60 mol% of repeating units (B).

The term "divinyl aromatic compound" used herein refers to a compound including a carbocyclic aromatic structure, and two hydrogen on a ring carbon atom or ring carbon atoms of the carbocyclic aromatic structure are substituted by vinyl groups. In some embodiments, the vinyl groups may be unsubstituted. In some embodiments, at least one hydrogen atom on the vinyl groups may be substituted by a $C_{1-20}$ alkyl group. In some embodiments, the carbocyclic aromatic structure may include 6-60 or 6-20 ring carbon atoms. In some embodiments, the carbocyclic aromatic structure may be unsubstituted. In some embodiments, at least one hydrogen on the ring carbon atom in the carbocyclic aromatic structure may be substituted by a $C_{1-20}$ alkyl group. Examples of the divinyl aromatic compound may include, but are not limited to, a divinylbenzene.

The repeating unit (C) derived from a divinyl aromatic compound includes the carbocyclic aromatic structure

from the divinyl aromatic compound. In some embodiments, the repeating units (C) may include crosslinking units and non-crosslinking units. In some embodiments, the repeating units (C) may include crosslinking units represented as follows:

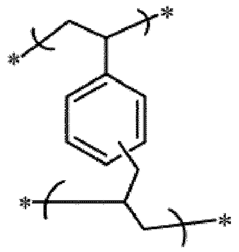
,

but the disclosure is not limited thereto. In some embodiments, the repeating units (C) may include non-crosslinking units represented as follows, but the disclosure is not limited thereto:

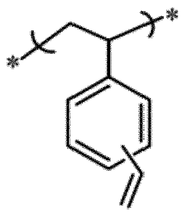
.

In the above structures, "*" represents a connecting site that connects other groups.

A cross-linking degree of the repeat units (C) is calculated by the following formula:

$$\frac{\text{the crosslinking units of the repeating units (C)}}{\text{the crosslinking units of the repeating units (C)} + \text{the non} - \text{crosslinking units of the repeating units (C)}}$$

In some embodiments, the cross-linking degree of the repeating units (C) is 0.2-0.6. When the cross-linking degree of the repeating units (C) is too low, for example, less than 0.2, the cross-linking degree of the hydrocarbon resin polymer is low. The thermal and electrical performance of the hydrocarbon resin polymer may be poor. If the cross-linking degree of the repeating units (C) is too high, for example, higher than 0.6, the processability of the hydrocarbon resin polymer will be deteriorated. The repeating units (C) can increase the cross-linking degree of the hydrocarbon resin polymer. The higher cross-linking degree of the hydrocarbon resin polymer has, the better the thermal performance, thermal stability, and/or the electrical performance of the hydrocarbon resin polymer. When the content of the repeating units (C) in the hydrocarbon resin polymer is too low, for example, less than 8 mol%, the cross-linking degree of the hydrocarbon resin polymer is low, and the thermal and/or electrical performance of the hydrocarbon resin polymer are poor. When the content of the repeating units (C) in the hydrocarbon resin polymer is too high, for example, higher than 80 mol%, the processability of the hydrocarbon resin polymer will be deteriorated. In some embodiments, the hydrocarbon resin polymer of the disclosure may include 10-80 mol%, 10-75 mol%, 15-75 mol%, 20-70 mol%, 25-65 mol%, 30-60 mol% , or 35-55 mol% of repeating units (C). In some embodiments, the hydrocarbon resin polymer of the disclosure may include 40 mol%, 45 mol%, or 40 mol% of repeating units (C). In some embodiments, the sum of the repeating units (A) and the repeating units (C) is greater than or equal to 13 mol%. As mentioned above, both the repeating units (A) and the repeating units (C) will affect the thermal properties and thermal stability of the hydrocarbon resin polymer. The inventors found that when the sum of the repeating units (A) and the repeating units (C) is greater than or equal to 13 mol%, a hydrocarbon resin polymer has excellent thermal properties and thermal stability can be provided.

In some embodiments, reactive double bonds may be included in the hydrocarbon resin polymer. The term "reactive double bond" used herein refers to the double bonds in the repeating units (A) or the repeating units (C) that can react with other compounds or polymers. For example, in some embodiments, the reactive double bonds include the double bonds in repeating units (A) represented as follows:

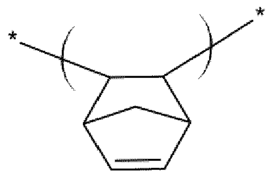
,
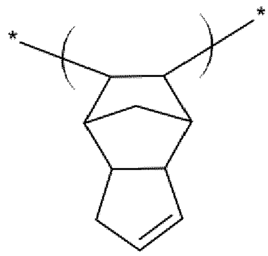
,

or

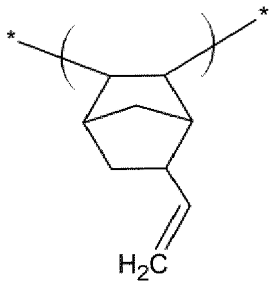
;

and the double bond not in the benzene ring and in repeating units (C) represented as follows:

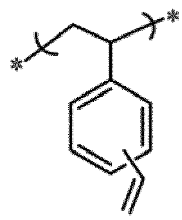
,

but the disclosure is not limited thereto.

In some embodiments, a content of hydrogen atoms in the reactive double bonds in the hydrocarbon resin polymer is less than 10%. When the hydrogen atom content in the reactive double bonds in the hydrocarbon resin polymer is too high, such as higher than 10%, the hydrocarbon resin polymer is susceptible to oxidation during the heating process, resulting in the hydrocarbon resin polymer having poor electrical properties. In some embodiments, the hydrogen atom content in the reactive double bonds in the hydrocarbon resin polymer is greater than 2.2%. When the hydrogen atom content in the reactive double bonds in the hydrocarbon resin polymer is too low, for example, less than 2.2%, a peel strength of a layer including the hydrocarbon resin polymer is too small. In some embodiments, the hydrogen atom content in the reactive double bonds in the hydrocarbon resin polymer may be 2.2%-10%, 2.5%-10%, 2.8%-9%, or 3%-8%. When the hydrogen atom content in the reactive double bonds in the hydrocarbon resin polymer is within the above range, the hydrocarbon resin polymer is not susceptible to oxidation, and it tends to complete a crosslinking reaction before being oxidized in a high-temperature environment (for example, above 150°C). Therefore, the electrical performance of the hydrocarbon resin polymer can be improved. In some embodiments, a number average molecular weight (Mn) of the hydrocarbon resin polymer may be 2,500-10,000 g/mol. When the number average molecular weight of the hydrocarbon resin polymer is too high, the solubility of the hydrocarbon resin polymer would be decreased.

The hydrocarbon resin polymer of the disclosure having the above features has good thermal performance, thermal stability, and/or good electrical performance. For example, in some embodiments, the hydrocarbon resin polymer of the disclosure has a glass transition temperature greater than about 100°C, a dielectric constant (Dk) less than about 3.4, a dielectric loss tangent (Df) less than about 0.0030, a difference of the dielectric constants and/or a difference of the dielectric loss tangents before and after the heating process are small, and/or the dielectric loss tangent is less than about 0.0020 after the heating process. In addition, the hydrocarbon resin polymer of the disclosure also has good solubility and/or processability. Therefore, the hydrocarbon resin polymer of the disclosure can be easily dissolved in a solvent to form a resin composition having good thermal performance, thermal stability, good electrical performance, and/or good processability.

The disclosure further provides a resin composition including the hydrocarbon resin polymer mentioned above. In some embodiments, the resin composition may further include other hydrocarbon resin polymers. Herein, other hydrocarbon resin polymers refer to any known hydrocarbon resin polymers except the hydrocarbon resin polymers disclosed in the disclosure. In some embodiments, the resin composition may further include other resin polymers. The other resin polymers herein refer resin polymers other than hydrocarbon resin polymers. Examples of other resin polymers may include polyphenylene ether resins, polycarbonate resins, acrylic resins, epoxy resins, polyurethane resins, or any combination thereof, but the disclosure is not limited thereto. In some embodiments, the weight ratio of the hydrocarbon resin polymer of the disclosure to the other resin polymers in the resin composition may be 100-1:0-99. In some embodiments, the weight ratio of the sum of the hydrocarbon resin polymer and the other hydrocarbon resin polymers to the other resin polymers in the resin composition may be 100-1:0-99. That is, by weight, (the hydrocarbon resin polymer + the other hydrocarbon resin polymer): the other resin polymers can be 100-1:0-99.

In some embodiments, the resin composition of the disclosure further includes a solvent capable of dissolving the hydrocarbon resin polymer and/or the other resin polymers. In some embodiments, the solvent is toluene. In some embodiments, based on the total weight of the hydrocarbon resin polymer and other resin polymers is 100 parts by weight (when the resin composition does not include the other resin polymers, the weight of the hydrocarbon resin polymer is 100 parts by weight), the resin composition may include 80-100 parts by weight, 90-100 parts by weight, or 95-100 parts by weight of solvent.

In some embodiments, the resin composition further includes an initiator and/or a crosslinking agent. In some embodiments, based on the total weight of the hydrocarbon resin polymer and the other resin polymers is 100 parts by weight, the resin composition may include 0.1 to 5 parts by weight, 0.1 to 4 parts by weight, 0.1 to 3 parts by weight, 0.1-2 parts by weight, 0.1-1 parts by weight, 0.1-0.5 parts by weight, 0.2-0.4 parts by weight, 0.3-0.4 parts by weight, or 0.3-0.35 parts by weight of the initiator. In some embodiments, based on the total weight of the hydrocarbon resin polymer and the other resin polymers is 100 parts by weight, the resin composition may include 10 to 50 parts by weight, 12 to 40 parts by weight, or 15 to 35 parts by weight of the cross-linking agent.

In some embodiments, the resin composition may further include one or more additives. That is, in addition to the hydrocarbon resin polymer and the other resin polymers, in some embodiments, the resin composition may further include an initiator, a crosslinking agent, an additive, or any combination thereof. In some embodiments, based on the total weight of the hydrocarbon resin polymer and the other resin polymers is 100 parts by weight, the resin composition may include 10 to 100 parts by weight, 15 to 85 parts by weight, or 25 to 55 parts by weight of the additives. Examples of the additives may include toughening agents, fillers, and/or photosensitizers, but the disclosure is not limited thereto.

The hydrocarbon resin polymer disclosed herein has good thermal performance, good thermal stability, good electrical performance, good solubility and/or good processability. Therefore, the hydrocarbon resin polymer of the disclosure is suitable for preparations of substrates. Furthermore, the substrate including the hydrocarbon resin polymer would also have good thermal performance, good thermal stability, and/or good electrical performance.

The disclosure further provides a substrate including a hydrocarbon resin polymer or a combination of a hydrocarbon resin polymer and other resin polymers. In some embodiments, the hydrocarbon resin polymer may include the hydrocarbon resin polymer described above. In some embodiments, the hydrocarbon resin polymer may further include other hydrocarbon resin polymers. Herein, other hydrocarbon resin polymers refer to any known hydrocarbon resin polymers except the hydrocarbon resin polymers disclosed in the disclosure. The other resin polymers herein refer resin polymers other than hydrocarbon resin polymers. Examples of other resin polymers may include polyphenylene ether resins, polycarbonate resins, acrylic resins, epoxy resins, polyurethane resins, or any combination thereof, but the disclosure is not limited thereto. In some embodiments, the weight ratio of the hydrocarbon resin polymer to the other resin polymers in the resin composition may be 100-1:0-99. In some embodiments, the weight ratio of the hydrocarbon resin polymer of the disclosure to the other hydrocarbon resin polymers in the resin composition may be 100-1:0-99.

Figure 1 is a schematic diagram of a substrate 10 according to an embodiment of the disclosure. As shown in Figure 1, the substrate 10 includes a base 101 , a polymer layer 103 disposed on the base 101, and an adhesive layer 105 disposed between the base 101 and the polymer layer 103. The adhesive layer 105 connects the substrate 101 and the polymer layer 103.

In some embodiments, the substrate 101 may include a metal layer. In some embodiments, the substrate 101 may include a copper foil. In some embodiments, the polymer layer 103 includes the hydrocarbon resin polymer mentioned above or a combination of the hydrocarbon resin polymer and other resin polymers. In some embodiments, the adhesive layer 105 may include any material that can connect the substrate 101 and the polymer layer 103. In some embodiments, the adhesive layer 105 may include a silane adhesive.

An embodiment of the disclosure provides a preparation method of a hydrocarbon resin polymer, including: providing 15-50 mol% of bridged ring monomer compounds; providing 38-80 mol% of monovinyl aromatic compounds; providing 2-45 mol% of divinyl aromatic compounds; and polymerizing the bridged ring monomer compounds, the monovinyl aromatic compounds, and the divinyl aromatic compounds to form the hydrocarbon resin polymer.

One or more embodiments of the disclosure will be described in detail with reference to the following examples.

However, these examples are only used to illustrate the embodiments of the disclosure and are not intended to limit the scope of the embodiments of the disclosure.

[Preparation of hydrocarbon resin polymers of Examples 1-23 and Comparative Examples 2-17]

Bridged ring monomer compounds, monovinyl aromatic compounds, and divinyl aromatic compounds and toluene were added to a two-necked flask to form a mixture in ratios shown in Table 1 below. Catalysts shown in Table 1 were added to the mixtures. The mixtures were stirred for 3 hours at reaction temperatures shown in Table 1 below to polymerize the bridged ring monomer compounds, monovinyl aromatic compounds, and divinyl aromatic compounds. Ammonium hydroxide ($NH_4OH$) was added to the two-necked flask to terminate the polymerization reaction. A polymer solution obtained from the polymerization reaction was dropped into isopropanol to obtain a white solid. The white solid was filtered and dried under vacuum to obtain the hydrocarbon resin polymers of Examples 1-23. Commercially available SA9000 resin (polyphenylene ether resin) was used as Comparative Example 1, and the hydrocarbon resin polymers of Comparative Examples 2-17 were prepared in the same manner as the hydrocarbon resin polymers of Examples 1-23 above. The yields of the hydrocarbon resin polymers of Examples 1 to 23 and Comparative Examples 2 to 17 are shown in Table 1 below. The hydrocarbon resin polymers of Examples 1-23 and Comparative Examples 2-17 and the polyphenylene ether resin of Comparative Example 1 are collectively referred to as resins

Table 1

| | Example 1 | Example 2 | Example 3 | Example 4 |
|---|---|---|---|---|
| Norbornene (mol %) | 40 | 33 | 37 | 30 |
| Dicyclopentadiene (mol %) | -- | -- | -- | -- |
| Styrene (mol %) | 35 | 44 | 32 | 40 |
| Methylstyrene (mol %) | -- | -- | -- | -- |
| Ethylstyrene(mol %) | 5 | 4.6 | 6.2 | 6 |
| Divinylbenzene (mol %) | 20 | 18.4 | 24.8 | 24 |
| Reaction temperature (°C) | 60 | RT | 60 | 60 |
| Catalyst | $Ni(2\text{-}EHA)_2$/ Isoqunoline/ $BF_3{\cdot}OEt_2$ | $BF_3{\cdot}OEt_2$ | $Ni(2\text{-}EHA)_2$/ Isoqunoline/ $BF_3{\cdot}OEt_2$ | $Ni(2\text{-}EHA)_2$/ Isoqunoline/ $BF_3{\cdot}OEt_2$ |
| Yield (%) | 66.76 | 69 | 48.38 | 52.13 |
| | Example 5 | Example 6 | Example 7 | Example 8 |
| Norbornene (mol %) | 37 | 35 | -- | -- |
| Dicyclopentadiene (mol %) | -- | -- | 20 | 20 |
| Styrene (mol %) | 35 | 40 | 30 | 60 |
| Methylstyrene (mol %) | -- | -- | -- | -- |
| Ethylstyrene(mol %) | 5.6 | 5 | 10 | 4 |
| Divinylbenzene (mol %) | 22.4 | 20 | 40 | 16 |

(continued)

| | Example 5 | Example 6 | Example 7 | Example 8 |
|---|---|---|---|---|
| Reaction temperature (°C) | 60 | 60 | 0 | RT |
| Catalyst | Ni(2-EHA)$_2$/ Isoqunoline/ $BF_3$·$OEt_2$ | Ni(2-EHA)$_2$/ Isoqunoline/ $BF_3$·$OEt_2$ | $BF_3$·$OEt_2$ | $BF_3$·$OEt_2$ |
| Yield (%) | 45.19 | 71.17 | 61 | 50 |
| | Example 9 | Example 10 | Example 11 | Example 12 |
| Norbornene (mol %) | -- | -- | -- | -- |
| Dicyclopentadiene (mol %) | 28 | 28 | 23 | 20 |
| Styrene (mol %) | 37 | 37 | 47 | 60 |
| Methylstyrene (mol %) | -- | -- | -- | -- |
| Ethylstyrene(mol %) | 7 | 7 | 6 | 4 |
| Divinylbenzene (mol %) | 28 | 28 | 24 | 16 |
| Reaction temperature (°C) | 60 | 60 | 60 | RT |
| Catalyst | Ni(2-EHA)$_2$/ Isoqunoline/ $BF_3$·$OEt_2$ | Ni(2-EHA)$_2$/ Isoqunoline/ $BF_3$·$OEt_2$ | Ni(2-EHA)$_2$/ Isoqunoline/ $BF_3$·$OEt_2$ | $BF_3$·$OEt_2$ |
| Yield (%) | 30.47 | 55.95 | 37.68 | 44 |
| | Example 13 | Example 14 | Example 15 | Example 16 |
| Norbornene (mol %) | -- | -- | -- | -- |
| Dicyclopentadiene (mol %) | 19 | 20 | 20 | 20 |
| Styrene (mol %) | 57 | 60 | 65 | 70 |
| Methylstyrene (mol %) | -- | -- | -- | -- |
| Ethylstyrene(mol %) | 9 | 7.4 | 5.55 | 3.7 |
| Divinylbenzene (mol %) | 15 | 12.6 | 9.45 | 6.3 |
| Reaction temperature (°C) | 0 | 0 | 0 | 0 |
| Catalyst | $BF_3$·$OEt_2$ | $BF_3$·$OEt_2$ | $BF_3$·$OEt_2$ | $BF_3$·$OEt_2$ |
| Yield (%) | 48 | 46.50 | 44.40 | 31.70 |
| | Example 17 | Example 18 | Example 19 | Example 20 |
| Norbornene (mol %) | -- | -- | -- | -- |

(continued)

| | Example 17 | Example 18 | Example 19 | Example 20 |
|---|---|---|---|---|
| Dicyclopentadiene (mol %) | 20 | 20 | 20 | 20 |
| Styrene (mol %) | 75 | -- | -- | -- |
| Methylstyrene (mol %) | -- | 60 | 60 | 65 |
| Ethylstyrene(mol %) | 1.85 | 7.4 | 7.4 | 5.55 |
| Divinylbenzene (mol %) | 3.15 | 12.6 | 12.6 | 9.45 |
| Reaction temperature (°C) | 0 | 0 | 20 | 20 |
| Catalyst | $BF_3 \cdot OEt_2$ | $BF_3 \cdot OEt_2$ | $BF_3 \cdot OEt_2$ | $BF_3 \cdot OEt_2$ |
| Yield (%) | 26.60 | 42 | 54 | 50.60 |
| | Example 21 | Example 22 | Example 23 | |
| Norbornene (mol %) | -- | | -- | |
| Dicyclopentadiene (mol %) | 20 | 20 | 20 | |
| Styrene (mol %) | -- | | -- | |
| Methylstyrene (mol %) | 65 | 60 | 60 | |
| Ethylstyrene(mol %) | 5.55 | | 7.4 | |
| Divinylbenzene (mol %) | 9.45 | 20 | 12.6 | |
| Reaction temperature | 65 | 60 | RT | |
| (°C) | | | | |
| Catalyst | TDC/$BF_3 \cdot OEt_2$ | TDC/$BF_3 \cdot OEt_2$ | $BF_3 \cdot OEt_2$ | |
| Yield (%) | 76.57 | 55.82 | 35 | |
| | Comparative Example 2 | Comparative Example 3 | Comparative Example 4 | Comparative Example 5 |
| Norbornene (mol %) | 34 | 30 | 40 | -- |
| Dicyclopentadiene (mol %) | -- | -- | -- | 27 |
| Styrene (mol %) | 36 | 30 | 30 | 38 |
| Methylstyrene (mol %) | -- | -- | -- | -- |
| Ethylstyrene(mol %) | 6 | 8 | 6 | 7 |
| Divinylbenzene (mol %) | 24 | 32 | 24 | 28 |

(continued)

| | Comparative Example 2 | Comparative Example 3 | Comparative Example 4 | Comparative Example 5 |
|---|---|---|---|---|
| Reaction temperature (°C) | 60 | 60 | 60 | 60 |
| Catalyst | Ni(2-EHA)$_2$/ Isoqunoline/ $BF_3{\cdot}OEt_2$ | Ni(2-EHA)$_2$/ Isoqunoline/ $BF_3{\cdot}OEt_2$ | Ni(2-EHA)$_2$/ Isoqunoline/ $BF_3{\cdot}OEt_2$ | Ni(2-EHA)$_2$/ Isoqunoline/ $BF_3{\cdot}OEt_2$ |
| Yield (%) | 17.39 | 18.36 | 24.58 | 55.43 |
| | Comparative Example 6 | Comparative Example 7 | Comparative Example 8 | Comparative Example 9 |
| Norbornene (mol %) | 100 | 100 | 50 | 50 |
| Dicyclopentadiene (mol %) | -- | -- | -- | -- |
| Styrene (mol %) | -- | -- | -- | -- |
| Methylstyrene (mol %) | -- | -- | -- | -- |
| Ethylstyrene (mol %) | -- | -- | 10 | 10 |
| Divinylbenzene (mol %) | -- | -- | 40 | 40 |
| Reaction temperature (°C) | 25 | 25 | 60 | 60 |
| Catalyst | -- | -- | -- | -- |
| Yield (%) | 73.33 | 66.67 | Gel | 87.41 |
| | Comparative Example 10 | Comparative Example 11 | Comparative Example 12 | Comparative Example 13 |
| Norbornene (mol %) | 58.3 | 100 | 40 | -- |
| Dicyclopentadiene (mol %) | -- | -- | -- | 25 |
| Styrene (mol %) | -- | -- | -- | -- |
| Methylstyrene (mol %) | -- | -- | -- | -- |
| Ethylstyrene(mol %) | 8.3 | | 12 | 15 |
| Divinylbenzene (mol %) | 33.4 | | 48 | 60 |
| Reaction temperature | 60 | 60 | 60 | 0 |
| (°C) | | | | |
| Catalyst | -- | -- | -- | -- |
| Yield (%) | Gel | 45.91 | Gel | 75 |

(continued)

| | Comparative Example 14 | Comparative Example 15 | Comparative Example 16 | Comparative Example 17 |
|---|---|---|---|---|
| Norbornene (mol %) | 90 | -- | -- | 40 |
| Dicyclopentadiene (mol %) | -- | 100 | 20 | -- |
| Styrene (mol %) | -- | -- | 60 | -- |
| Methylstyrene (mol %) | -- | -- | -- | -- |
| Ethylstyrene(mol %) | 2 | -- | 4 | 12 |
| Divinylbenzene (mol %) | 8 | -- | 16 | 48 |
| Reaction temperature (°C) | 25 | 60 | 25 | 60 |
| Catalyst | -- | -- | -- | -- |
| Yield (%) | 13.97 | 27.01 | 56.87 | Gel |
| * mol% indicates mole fraction.<br>* "Gel" indicates that the polymer is not soluble in the solvent, so the yield cannot be measured. | | | | |

[Structure Analysis of Hydrocarbon Resin Polymer]

Analyzing structures of the hydrocarbon resin polymers of Examples 7-17 and 23 and Comparative Examples 5, 13, 15, and 16 by a nuclear magnetic resonance spectroscopic device (JEOL, JNM-ECZ400S), by $^{13}C$-NMR (Nuclear Magnetic Resonance, NMR) and $^{1}H$-NMR. The hydrocarbon resin polymers include the repeating units derived from the compounds shown in Table 2. Table 2 further discloses contents of each repeating unit in the hydrocarbon resin polymer. $CDCl_3$ was used as a dissolvent. A resonance line of $CDCl_3$ was used as an internal standard, the cross-linking degrees of the hydrocarbon resin polymers are calculated according to the following formula, and the results are shown in the following table 2:

$$\frac{\text{the crosslinking units of the repeating units (C)}}{\text{the crosslinking units of the repeating units (C)} + \text{the non} - \text{crosslinking units of the repeating units (C)}}$$

Table 2

| | Example 7 | Example 8 | Example 9 | Example 10 |
|---|---|---|---|---|
| Norbornene (mol %) | -- | -- | -- | -- |
| Dicyclopentadiene (mol %) | 3 | 3 | 10 | 12 |
| Styrene (mol %) | 1 | 52 | 26 | 28 |
| Methylstyrene (mol %) | -- | -- | -- | -- |
| Ethylstyrene (mol %) | 19 | 4.8 | 13 | 12 |
| Non Cross-linked Styrene (mol %) | 38 | 19.3 | 34 | 28 |
| Cross-linked Styrene (mol %) | 39 | 20.9 | 17 | 20 |
| Bridged ring monomer compounds + Divinyl aromatic compounds (mol %) | 80 | 43.2 | 61 | 60 |

(continued)

| | Example 7 | Example 8 | Example 9 | Example 10 |
|---|---|---|---|---|
| Cross-linking degree | 0.51 | 0.52 | 0.33 | 0.42 |
| | Example 11 | Example 12 | Example 13 | Example 14 |
| Norbornene (mol %) | -- | -- | -- | -- |
| Dicyclopentadiene (mol %) | 9 | 4 | 3 | 2 |
| Styrene (mol %) | 43 | 61 | 56 | 64 |
| Methylstyrene (mol %) | -- | -- | -- | -- |
| Ethylstyrene (mol %) | 10 | 7 | 15 | 12 |
| Non Cross-linked Divinylbenzene (mol %) | 23 | 21 | 20 | 14 |
| Cross-linked Divinylbenzene (mol %) | 15 | 7 | 6 | 8 |
| Bridged ring monomer compounds + Divinyl aromatic compounds (mol %) | 48 | 32 | 29 | 24 |
| Cross-linking degree | 0.41 | 0.25 | 0.23 | 0.36 |
| | Example 15 | Example 16 | Example 17 | Example 23 |
| Norbornene (mol %) | -- | -- | -- | -- |
| Dicyclopentadiene (mol %) | 3 | 2 | 3 | 0.9 |
| Styrene (mol %) | 67 | 76 | 80 | -- |
| Methylstyrene (mol %) | -- | -- | -- | 73.6 |
| Ethylstyrene (mol %) | 11 | 8 | 6 | 8.2 |
| Non Cross-linked Divinylbenzene (mol %) | 12 | 8 | 5 | 17.3 |
| Cross-linked Divinylbenzene (mol %) | 7 | 6 | 6 | -- |
| Bridged ring monomer compounds + Divinyl aromatic compounds (mol %) | 22 | 16 | 14 | 18.2 |
| Cross-linking degree | 0.37 | 0.43 | 0.55 | |
| | Comparative Example 5 | Comparative Example 13 | Comparative Example 15 | Comparative Example 16 |
| Norbornene (mol %) | -- | -- | -- | -- |
| Dicyclopentadiene (mol %) | 6 | 14 | 100 | 3 |
| Styrene (mol %) | 18 | -- | -- | 56 |
| Methylstyrene (mol %) | -- | -- | -- | -- |
| Ethylstyrene (mol %) | 15 | 17 | -- | 4 |
| Non Cross-linked Divinylbenzene (mol %) | 45 | 48 | -- | 15 |
| Cross-linked Divinylbenzene (mol %) | 16 | 21 | -- | 22 |

(continued)

| | Comparative Example 5 | Comparative Example 13 | Comparative Example 15 | Comparative Example 16 |
|---|---|---|---|---|
| Bridged ring monomer compounds + Divinyl aromatic compounds (mol %) | 67 | 83 | 100 | 40 |
| Cross-linking degree | 0.26 | 0.30 | | 0.59 |

[Measurement of Hydrogen Atom Content in Reactive Double Bond]

The resins of Examples 1 to 23 and Comparative Examples 1 to 17 were dissolved in a deuterated chloroform ($CDCl_3$). The hydrogen atom contents in reactive double bonds of the resins of Examples 1-23 and Comparative Examples 1-17 were respectively measured by NMR (JEOL, JNM-ECZ400S/L1). Specifically, the hydrogen atom contents in reactive double bonds were calculated by dividing the sum of the integral values of the number of hydrogen atoms in the reactive double bonds by the sum of the integral values of all hydrogen atoms in the resins of Examples 1 to 23 and Comparative Examples 1 to 17.

[Measurement of Number Average Molecular Weight (Mn) and Polymer Dispersity Index (PDI)]

Polystyrene was used as a standard to measure number average molecular weights and polymer dispersity indexes (PDI) of the resins of Examples 1 to 23 and Comparative Examples 1 to 17 by a gel permeation chromatography (GPC) (Waters APC, column: Waters Acquity XT 900).

5 mL of tetrahydrofuran (THF) was added to 0.01 g of the resin of Examples 1-23 and Comparative Examples 1-17 respectively, to obtain samples of Examples 1-23 and Comparative Examples 1-17. The samples of Examples 1-23 and Comparative Examples 1-17 were analyzed by an instrument after filtered by a 0.22 μm filter to obtain the number average molecular weight (Mn) and polymer dispersity index (PDI) of the resins of Examples 1-23 and Comparative Examples 1-17.

[Measurement of Thermal Decomposition Temperature (Td) and Oxidizing Temperature]

The thermal decomposition temperatures (Td) and the oxidizing temperatures of the resins of Examples 1-23 and Comparative Examples 1-17 were measured by thermogravimetric analysis (TGA, TA/Q500).

The test temperature range is from the room temperature to 900°C. The heating rate was 10°C/min, without nitrogen flow protection. The oxidizing temperature here is a temperature at which the weights of the resins were increased. No oxidizing temperature detected indicates that the oxidizing temperature of the resin is very high, and the resin has very good thermal stability.

[Measurement of Glass Transition Temperature (Tg)]

The glass transition temperatures (Tg) of the resins of Examples 1 to 23 and Comparative Examples 1 to 17 were measured by dynamic mechanical analysis (DMA, TA/Q800).

The resins of Examples 1-23 and Comparative Examples 1-17 were heated from 25°C to 270°C at a heating rate of 3°C/min. The test frequency is 1Hz. The glass transition temperatures (Tg) of the resins of Examples 1-23 and Comparative Examples 1-17 were obtained from tan Delta peaks in a DMA charts.

[Polymer Form]

During the preparation of the resin, ammonium hydroxide ($NH_4OH$) was added to the two-necked flask to terminate the polymerization reaction. Form of the reaction solution after terminating the polymerization reaction was observed by the naked eye. When the reaction solution has no fluidity, the polymer form of the resin is determined as gel state, which indicates that the resin is over cross-linked during the polymerization reaction.

[Solubility test]

1 g of the resins of Examples 1-23 of and Comparative Examples 1-17 were added to 1 g of toluene respectively.

The resin, which is completely dissolved and clear after stirring at room temperature for 3 hours, would be determined as passing the solubility test.

The results of the measured properties of the resins of Examples 1-23 and Comparative Examples 1-17 above-mentioned are shown in Table 3 below.

Table 3

| | Example 1 | Example 2 | Example 3 | Example 4 |
|---|---|---|---|---|
| Hydrogen Atom Content in Reactive Double Bond (%) | 5.2 | 6.71 | 9.1 | 8 |
| Number Average Molecular Weight (Mn) | 2905 | 4670 | 3979 | 6521 |
| PDI | 4.3 | 17.8 | 3.86 | 10.86 |
| Td in $N_2$ (°C) (1wt% / 5wt%) | 281/378 | 330/408 | -- | 341/373 |
| Oxidizing Temperature (°C) | undetected | undetected | -- | 176 |
| Tg (°C) DMA | 161 | 121 | -- | -- |
| Polymer Form | Liquid State | Liquid State | Liquid State | Liquid State |
| Solubility test (toluene) | Pass | Pass | Pass | Pass |
| | Example 5 | Example 6 | Example 7 | Example 8 |
| Hydrogen Atom Content in Reactive Double Bond (%) | 6.6 | 3.6 | 9.6 | 4.4 |
| Number Average Molecular Weight (Mn) | 6664 | 4334 | 5622 | 5255 |
| PDI | 5.14 | 18.93 | 3.6 | 5 |
| Td in $N_2$ (°C) (1wt% /5wt%) | 343/377 | 325/365 | 359/393 | -- |
| Oxidizing Temperature (°C) | 163 | undetected | 172 | undetected |
| Tg (°C) DMA | -- | 161 | 159 | -- |
| Polymer Form | Liquid State | Liquid State | Liquid State | Liquid State |
| Solubility test (toluene) | Pass | Pass | Pass | Pass |
| | Example 9 | Example 10 | Example 11 | Example 12 |
| Hydrogen Atom Content in Reactive Double Bond (%) | 8.8 | 7.8 | 6 | 5.6 |
| Number Average Molecular Weight (Mn) | 3418 | 4605 | 4652 | 7453 |
| PDI | 2.9 | 11.02 | 4.7 | 3.6 |
| Td in $N_2$ (°C) (1wt% / 5wt%) | 357/415 | 291/378 | | 360/392 |
| Oxidizing Temperature (°C) | undetected | 148.99 | -- | 186 |
| Tg (°C) DMA | -- | -- | -- | 120 |
| Polymer Form | Liquid State | Liquid State | Liquid State | Liquid State |
| Solubility test (toluene) | Pass | Pass | Pass | Pass |
| | Example 13 | Example 14 | Example 15 | Example 16 |
| Hydrogen Atom Content in Reactive Double Bond (%) | 5.1 | 4.1 | 3.3 | 3.1 |
| Number Average Molecular Weight (Mn) | 8148 | 6785 | 5708 | 4684 |

(continued)

| | Example 13 | Example 14 | Example 15 | Example 16 |
|---|---|---|---|---|
| PDI | 5.49 | 3.55 | 2.69 | 1.99 |
| Td in $N_2$ (°C) (1wt% / 5wt%) | 357/388 | 354/384 | 343/379 | 349/379 |
| Oxidizing Temperature (°C) | undetected | undetected | undetected | undetected |
| Tg (°C) DMA | 114 | 112 | 110 | 106 |
| Polymer Form | Liquid State | Liquid State | Liquid State | Liquid State |
| Solubility test (toluene) | Pass | Pass | Pass | Pass |
| | Example 17 | Example 18 | Example 19 | Example 20 |
| Hydrogen Atom Content in Reactive Double Bond (%) | 2 | 3.8 | 3.5 | 2.9 |
| Number Average Molecular Weight (Mn) | 3297 | 9125 | 9087 | 9239 |
| PDI | 1.68 | 3.76 | 9.42 | 5.04 |
| Td in $N_2$ (°C) (1wt% / 5wt%) | 342/374 | 359/386 | 350/378 | 354/380 |
| Oxidizing Temperature (°C) | undetected | undetected | undetected | undetected |
| Tg (°C) DMA | 103 | 108 | 137 | 119 |
| Polymer Form | Liquid State | Liquid State | Liquid State | Liquid State |
| Solubility test (toluene) | Pass | Pass | Pass | Pass |
| | Example 21 | Example 22 | Example 23 | |
| Hydrogen Atom Content in Reactive Double Bond (%) | 2.9 | 3.8 | 3.1 | |
| Number Average Molecular Weight (Mn) | 3996 | 4800 | 9167 | |
| PDI | 17 | 9.98 | 2.91 | |
| Td in $N_2$ (°C) (1wt% / 5wt%) | -- | -- | -- | |
| Oxidizing Temperature (°C) | -- | -- | -- | |
| Tg (°C) DMA | -- | -- | -- | |
| Polymer Form | Liquid State | Liquid State | Liquid State | |
| Solubility test (toluene) | Pass | Pass | Pass | |
| | Comparative Example 1 | Comparative Example 2 | Comparative Example 3 | Comparative Example 4 |
| Hydrogen Atom Content in Reactive Double Bond (%) | 2.8 | 17.1 | 15.1 | 12.8 |
| Number Average Molecular Weight (Mn) | 2746 | -- | -- | 5562 |
| PDI | 1.7 | -- | -- | 3.26 |
| Td in $N_2$ (°C) (1wt% / 5wt%) | 297/424 | -- | -- | -- |
| Oxidizing Temperature (°C) | undetected | -- | -- | -- |
| Tg (°C) DMA | 164 | -- | -- | -- |
| Polymer Form | Liquid State | Liquid State | Liquid State | Liquid State |
| Solubility test (toluene) | Pass | Pass | Pass | Pass |

(continued)

| | Comparative Example 5 | Comparative Example 6 | Comparative Example 7 | Comparative Example 8 |
|---|---|---|---|---|
| Hydrogen Atom Content in Reactive Double Bond (%) | 10.7 | -- | -- | -- |
| Number Average Molecular Weight (Mn) | 2983 | -- | -- | -- |
| PDI | 4.19 | -- | -- | -- |
| Td in $N_2$ (°C) (1wt% / 5wt%) | -- | -- | -- | -- |
| Oxidizing Temperature (°C) | -- | -- | -- | -- |
| Tg (°C) DMA | -- | -- | -- | -- |
| Polymer Form | Liquid State | -- | -- | -- |
| Solubility test (toluene) | Pass | Fail | Fail | Fail |
| | Comparative Example 9 | Comparative Example 10 | Comparative Example 11 | Comparative Example 12 |
| Hydrogen Atom Content in Reactive Double Bond (%) | -- | -- | -- | -- |
| Number Average Molecular Weight (Mn) | -- | -- | -- | -- |
| PDI | -- | -- | -- | -- |
| Td in $N_2$ (°C) (1wt% / 5wt%) | -- | -- | -- | -- |
| Oxidizing Temperature (°C) | -- | -- | -- | -- |
| Tg (°C) DMA | -- | -- | -- | -- |
| Polymer Form | -- | -- | -- | Gel State |
| Solubility test (toluene) | Fail | Fail | Fail | Fail |
| | Comparative Example 13 | Comparative Example 14 | Comparative Example 15 | Comparative Example 16 |
| Hydrogen Atom Content in Reactive Double Bond (%) | -- | -- | -- | -- |
| Number Average Molecular Weight (Mn) | -- | -- | -- | 10224 |
| PDI | -- | -- | -- | 13.5 |
| Td in $N_2$ (°C) (1wt% / 5wt%) | -- | 130/364 | 277/338 | -- |
| Oxidizing Temperature (°C) | -- | -- | -- | -- |
| Tg (°C) DMA | -- | -- | -- | -- |
| Polymer Form | Gel State | -- | -- | -- |
| Solubility test (toluene) | Fail | Fail | Pass | Fail |
| | Comparative Example 17 | | | |
| Hydrogen Atom Content in Reactive Double Bond (%) | -- | | | |
| Number Average Molecular Weight (Mn) | -- | | | |

(continued)

| | Comparative Example 17 | | | |
|---|---|---|---|---|
| PDI | -- | | | |
| Td in $N_2$ (°C) (1wt% / 5wt%) | -- | | | |
| Oxidizing Temperature (°C) | -- | | | |
| Tg (°C) DMA | -- | | | |
| Polymer Form | Gel State | | | |
| Solubility test (toluene) | Fail | | | |

As can be seen from Table 3, the hydrocarbon resin polymers of Comparative Examples 6-14, 16, and 17 fail the solubility test, and the hydrocarbon resin polymers of the Examples 1-23 of the disclosure all pass the solubility test. The above results indicate that compared with the hydrocarbon resin polymers of Comparative Examples 6-14, 16, and 17, the hydrocarbon resin polymers of the disclosure have better solubility. It can be further seen from Table 3 that the hydrocarbon resin polymers in Examples 1-23 of the disclosure all have high oxidizing temperatures. In addition, compared with the Td (1wt%/5wt%) of the hydrocarbon resin polymers of Comparative Examples 14-15, the hydrocarbon resin polymers of Examples 1-2, 4-7, 9-10, 12-20 have Td (1wt%) higher than 280°C and Td (5wt%) higher than 360°C, which indicates that the hydrocarbon resin polymer of the disclosure have good thermal properties and good thermal stability.

Referring to Comparative Examples 12, 13, and 17 of Table 1 and Table 3, it can be seen that when the added amount of the divinyl aromatic compounds is too high, for example, when higher than 40 mol%, the formed hydrocarbon resin polymer is in gel state. The generation of the gel polymer indicates that the reaction rate of the polymerization reaction is too fast, which is not conducive to the subsequent processing. That is, compared with the hydrocarbon resin polymers of Comparative Examples 12, 13, and 17, the hydrocarbon resin polymer of the disclosure have a better processability.

Referring to Example 7 and 12-17 of Table 2 and Table 3, it can be seen that, the higher ratio of the repeating units from the bridged ring monomer compounds plus the divinyl aromatic compounds in the hydrocarbon resin polymer, the higher the thermal decomposition temperature of the hydrocarbon resin polymer. The repeating units derived from the bridged ring monomer compounds + the divinyl aromatic compounds in the hydrocarbon resin polymers of Examples 7-17 of the disclosure are all greater than 13 mol%. Therefore, the hydrocarbon resin polymers of Examples 7-17 of the disclosure have good thermal properties and thermal stability. Referring to Comparative Examples 14 to 15 in Table 1-Table 3, it can be seen that the hydrocarbon resin polymer that does not include repeating units derived from the divinyl aromatic compounds, or the hydrocarbon resin polymer formed by adding a small amount of divinyl aromatic compounds, has a low thermal decomposition temperature, which indicates poor thermal properties.

[Electrical Performance Test]

(1) Test A

20 g of the resins of Examples 1-18 and 23 and Comparative Examples 1 and 2-5 were dissolved in 20 g of toluene to form a mixtures, respectively. Stir the mixture until the resin therein is completely dissolved to form resin solutions of Examples 1-18 and 23 and Comparative Examples 1 and 2-5.

Glass fiber cloths (Asahi 2116, Dk/Df=3.3/0.0030@ 28GHz) were immersed in the resin solutions of Examples 1 to 18 and 23 and Comparative Examples 1 and 2 to 5 for 16 hours to form samples of Examples 1 to 18 and 23 and Comparative Examples 1 and 2-5, respectively. Measure the Dk/Df and R.C. % of the samples at 28GHz by a network analyzer software (network analyzer Keysight, P5007A, SCR), results are shown in Table 4 below. Dk/Df and R.C.% of the samples at 28 GHz were measured again after the samples were baked at 170°C for 10 minutes, and results are shown in Table 4 below. Here, R.C.% represents the resin content (Resin content). R.C. %=(weight after baking-weight of glass fiber cloth)/weight after baking* 100%.

Table 4

| | Dk/Df and R.C. % before baking | Dk/Df after baking at 170 °C |
|---|---|---|
| Example 1 | 2.89/0.0021 (R.C. =63%) | 2.78/0.0015 |

(continued)

| | Dk/Df and R.C. % before baking | Dk/Df after baking at 170 °C |
|---|---|---|
| Example 2 | 3.01/0.0019 (R.C. =58%) | 3.04/0.0016 |
| Example 3 | 2.94/0.0019 (R.C. =57%) | 2.89/0.0018 |
| Example 4 | 2.24/0.0018 (R.C. =51%) | 2.30/0.0018 |
| Example 5 | 3.39/0.0019 (R.C. =60%) | 3.40/0.0019 |
| Example 6 | 2.83/0.0018 (R.C. =52%) | 2.80/0.0015 |
| Example 7 | 2.54/0.0017 (R.C. =73%) | 2.48/0.0016 |
| Example 8 | 2.81/0.0021 (R.C. =67%) | 2.85/0.0014 |
| Example 9 | 3.08/0.0020 (R.C. =57%) | 3.02/0.0019 |
| Example 10 | 2.99/0.0020 (R.C. =53%) | 3.01/0.0018 |
| Example 11 | 2.92/0.0022 (R.C. =53%) | 3.11/0.0019 |
| Example 12 | 2.95/0.0020 (R.C. =63%) | 2.92/0.0019 |
| Example 13 | 2.85/0.0021 (R.C. =67%) | 3.27/0.0014 |
| Example 14 | 3.10/0.0021 (R.C. =63%) | 2.79/0.0018 |
| Example 15 | 3.11/0.0023 (R.C. =60%) | 2.84/0.0019 |
| Example 16 | 3.08/0.0024 (R.C. =60%) | 2.82/0.0018 |
| Example 17 | 2.98/0.0024 (R.C. =60%) | 2.91/0.0019 |
| Example 18 | 2.84/0.0021 (R.C. =65%) | 2.89/0.0017 |
| Example 23 | 2.88/0.0020 (R.C. =56%) | 2.86/0.0020 |
| Comparative Example 1 | 2.73/0.0030 (R.C. =65%) | 2.64/0.0027 |
| Comparative Example 2 | 2.94/0.0024 (R.C. =63%) | 2.77/0.0033 |
| Comparative Example 3 | 2.28/0.0019 (R.C. =58%) | 2.15/0.0029 |
| Comparative Example 4 | 2.41/0.0020 (R.C. =52%) | 2.43/0.0034 |
| Comparative Example 5 | 3.19/0.0024 (R.C. =49%) | 3.03/0.0024 |

As can be seen from Table 4, Df values of the hydrocarbon resin polymers of Comparative Examples 2 to 5 are increased significantly after baking at 170° C for 10 minutes, and the Df values of the hydrocarbon resin polymers are greater than 0.0020. The above results indicate that compared with the hydrocarbon resin polymers of Comparative Examples 2-5, the hydrocarbon resin polymer of the disclosure has a better thermal stability. Therefore, the hydrocarbon resin polymer of the disclosure can maintain good electrical properties after the heating process.

(2) Test B

100 parts by weight of the hydrocarbon resin polymer of Example 1 and 50 parts by weight of a toughening agent (Ricon 100, purchased from cray valley), 1 part by weight of an initiator (Perbutyl P, purchased from NOF), and 35 parts by weight of a cross-linking agent (TAIC, purchased from cray valley) were dissolved in 100 parts by weight of toluene to form a mixture. Stir the mixture until the hydrocarbon resin polymer, the toughening agent, the initiator, and the crosslinking agent were completely dissolved to form a composition solution of Example 1. Composition solutions of Examples 2-7, 9-11, 13, 19 and 20 and Comparative Examples 1, 4 and 5 were formed in the same way by replacing the hydrocarbon resin polymer of Example 1 with the resins of Examples 2-7, 9-11, 13, 19 and 20 and Comparative Examples 1, 4 and 5, respectively.

Glass fiber cloths (Asahi 2116, Dk/Df=3.3/0.0030@ 28GHz) were immersed in the composition solutions of Examples 1-7, 9-11, 13, 19 and 20 and Comparative Examples 1, 4 and 5 to form composition samples of Examples 1-7, 9-11, 13, 19 and 20 and Comparative Examples 1, 4 and 5, respectively. Measure the Dk/Df and R.C. % of the samples at 28GHz by a network analyzer software (network analyzer Keysight, P5007A, SCR) after the composition

samples were baked at 160°C for 7 minutes, and results are shown in Table 5 below.

Table 5

| | Dk/Df after baking at 160°C |
|---|---|
| Example 1 | 3.30/0.0022 (R.C. =70%) |
| Example 2 | 3.06/0.0023 (R.C. =59%) |
| Example 3 | 3.12/0.0022 (R.C. =61%) |
| Example 4 | 2.77/0.0023 (R.C. =74%) |
| Example 5 | 3.24/0.0023 (R.C. =60%) |
| Example 6 | 3.28/0.0019 (R.C. =70%) |
| Example 7 | 2.68/0.0021 (R.C. =70%) |
| Example 9 | 3.08/0.0023 (R.C. =56%) |
| Example 10 | 3.24/0.0024 (R.C. =61%) |
| Example 11 | 3.04/0.0023 (R.C. =56%) |
| Example 13 | 2.84/0.0021 (R.C. =60%) |
| Example 19 | 2.42/0.0016 (R.C. =61%) |
| Example 20 | 2.79/0.0018 (R.C. =64%) |
| Comparative Example 1 | 2.79/0.0024 (R.C. =67%) |
| Comparative Example 4 | 3.15/0.0026 (R.C. =74%) |
| Comparative Example 5 | 3.18/0.0023 (R.C. =68%) |

As can be seen from Table 5, after being baked at 160°C, the resin composition including the hydrocarbon resin polymers of Example 1-7, 9-11, 13, 19 and 20, the toughening agent, the initiator and the crosslinking agent etc. have excellent Dfs, for example, less than 0.0024, even less than 0.0020. Therefore, the resin composition of the disclosure still has good electrical properties after the heating process.

(3) Test C

100 parts by weight of the hydrocarbon resin polymer of Example 1 and 50 parts by weight of a toughening agent (Ricon 100, purchased from cray valley), 1 part by weight of an initiator (Perbutyl P, purchased from NOF), 35 parts by weight of a cross-linking agent (TAIC, purchased from cray valley) and 30 parts by weight of filler (SVC, purchased from Admatch or SS-10, purchased from Tokuyama) were mixed with 100 parts by weight of toluene to form a mixture. The filler was ground by zirconium beads until it was uniformly dispersed in the mixture to form a polymer solution of Example 1. Two glass fiber cloth (Asahi 2116, Dk/Df=3.3/0.0030@28GHz) were immersed in the polymer solution of Example 1, and baked at 160° C for 7 minutes to form 2 polymer layers. The 2 polymer layers are laminated with a copper foil. The copper foil is placed between the 2 polymer layers. The copper foil and the polymer layers are connected by a silane adhesive (KBM503) to form a laminated structure of Example 1. A pressure of 400 PSI was applied to the laminated structure of Example 1 at a temperature of 210° C for 1 hour to complete a substrate sample of Example 1.

Substrate samples of Examples 2, 4-7, 9-11, 13-20 and 22 and Comparative Examples 1 and 5 were formed in the same way by replacing the hydrocarbon resin polymer of Example 1 with the resins of Examples 2, 4-7, 9-11, 13-20 and 22 and Comparative Examples 1 and 5, respectively. Measure the Dk/Df of the substrate samples at 28GHz by a network analyzer software (network analyzer Keysight, P5007A, SCR), results are shown in Table 6 below.

Table 6

| | Dk/Df after hot pressing at 210°C |
|---|---|
| Example 1 | 2.98/0.0028 |
| Example 2 | 2.80/0.0027 |
| Example 4 | 2.79/0.0029 |

(continued)

| | Dk/Df after hot pressing at 210°C |
|---|---|
| Example 5 | 2.37/0.0029 |
| Example 6 | 3.13/0.0027 |
| Example 7 | 2.66/0.0030 |
| Example 9 | 3.33/0.0032 |
| Example 10 | 2.84/0.0029 |
| Example 11 | 2.82/0.0028 |
| Example 13 | 2.93/0.0025 |
| Example 14 | 3.06/0.0025 |
| Example 15 | 3.44/0.0028 |
| Example 16 | 3.00/0.0023 |
| Example 17 | 3.47/0.0026 |
| Example 18 | 2.56/0.0023 |
| Example 19 | 2.93/0.0022 |
| Example 20 | 3.11/0.0023 |
| Example 22 | 3.03/0.0024 |
| Comparative Example 1 | 3.31/0.0031 |
| Comparative Example 5 | 3.61/0.0035 |

It can be seen from Table 6 that the substrate samples disclosed in the disclosure have good electrical properties, for example, have Df less than 0.0032, or even less than 0.0025.

[Peel Strength Test]

100 parts by weight of the hydrocarbon resin polymer of Example 8 and 25 parts by weight of a toughening agent (Ricon 100, purchased from cray valley), 1 part by weight of an initiator (Perbutyl P, purchased from NOF), 15 parts by weight of a cross-linking agent (TAIC, purchased from cray valley) and 30 parts by weight of filler (SVC, purchased from Admatch or SS-10, purchased from Tokuyama) were mixed with 100 parts by weight of toluene to form a mixture. The filler was ground by zirconium beads until it was uniformly dispersed in the mixture to form a polymer solution of Example 8. Four glass fiber cloth (Asahi 2116, Dk/Df=3.3/0.0030@28GHz) were immersed in the polymer solution of Example 8, and baked at 160° C for 7 minutes to form 4 polymer layers. Silane adhesive (KBM503) was applied on surfaces of copper foil layers, laminate the 4 polymer layers and the copper foil layers, place the copper foil layers between the 4 polymer layers and press them together to form a laminated structure sample of Example 8.

Laminated structure samples of Examples 14-17 were formed in the same way by replacing the hydrocarbon resin polymer of Example 8 with the resins of Examples 14-17, respectively. Each of the laminated structure samples of Examples 8 and 14-17 has a sample width of 12.7 mm. Peel strengths of the laminated structure samples were measured by a tensile testing device (SHIMADZU AG-Xplus, test conditions: test speed 50.8 mm/min, test length: 20mm), and results are shown in Table 7 below.

Table 7

| | peel strength (lb/in) | hydrogen atom content in the reactive double bond (%) |
|---|---|---|
| Example 8 | 2.91 | 4.4 |
| Example 14 | 2.85 | 4.1 |
| Example 15 | 2.63 | 3.3 |
| Example 16 | 2.46 | 3.1 |

(continued)

| | peel strength (lb/in) | hydrogen atom content in the reactive double bond (%) |
|---|---|---|
| Example 17 | 0.89 | 2.0 |

From Table 7, it can be seen that the lower the hydrogen atom content in the reactive double bonds in the hydrocarbon resin polymer, the lower the peel strength. Specifically, the hydrocarbon resin polymer of Example 17 has a lower hydrogen atom content in the reactive double bonds (2%) and a lower peel strength (0.89 lb/in). Therefore, preferably, in some embodiments, the hydrogen atom content in the reactive double bonds in the hydrocarbon resin polymer is greater than 2.2%, preferably 2.2%-10%. Therefore, in addition to excellent thermal stability and electrical performance, the substrates that include the hydrocarbon resin polymers can also have high peel strength and reliability.

According to the various tests mentioned above, it can be seen that the hydrocarbon resin polymers prepared by the preparation method of the disclosure have good thermal performance, good thermal stability, good electrical performance, good solubility, and/or good processability. The hydrocarbon resin polymers of the present disclosure still maintain good electrical properties after a heating process and/or a hot pressing process, and are cost-effective. The resin composition including the hydrocarbon resin polymer of the present disclosure has good thermal performance, good thermal stability, good electrical performance, and/or good processability. The substrate including the hydrocarbon resin polymers of the present disclosure also has good thermal performance, good thermal stability, and/or good electrical performance.

While the invention has been described by way of example and in terms of the preferred embodiments, it should be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

The present invention also includes the following items:

1. A hydrocarbon resin polymer, comprising:

   0.15-15 mol% of repeating units (A), which are derived from bridged ring monomer compounds;

   15-90 mol% of repeating units (B), which are derived from monovinyl aromatic compounds; and

   8-80 mol% of repeating units (C), which are derived from divinyl aromatic compounds.

2. The hydrocarbon resin polymer of item 1, wherein the bridged ring monomer compound comprises a bridged ring structure, and the bridged ring structure comprises 3-12 ring atoms and 1-2 double bonds.

3. The hydrocarbon resin polymer of item 2, wherein at least one hydrogen atom on the bridged ring structure is substituted by at least one substituent selected from a group consisting of a $C_{1-20}$ alkyl group, a $C_{2-20}$ alkenyl group, and a carboxylate group having $C_{1-20}$ alkyl chain group.

4. The hydrocarbon resin polymer of item 3, wherein at least two substituents are substituted by at least two substituents selected from a group consisting of a $C_{1-20}$ alkyl group, a $C_{2-20}$ alkenyl group, and a carboxylate group having $C_{1-20}$ alkyl chain group, and the at least two substituents together form a ring.

5. The hydrocarbon resin polymer of item 1, wherein the bridged ring monomer compound is selected from a group consisting of a norbornene (NB), a dicyclopentadiene (DCPD), a dicycloheptadiene (NBD), a 2-acetyl-5-norbornene, a vinyl norbornene, and an ethylidene-norbornene.

6. The hydrocarbon resin polymer of item 1, wherein a sum of the repeating units (A) and the repeating units (C) is greater than or equal to 13 mol%.

7. The hydrocarbon resin polymer of item 1, wherein the hydrocarbon resin polymer comprises 3-12 mol% of the repeating units (A).

8. The hydrocarbon resin polymer of item 1, wherein the hydrocarbon resin polymer comprises 25-85 mol% of the repeating units (B).

9. The hydrocarbon resin polymer of item 1, wherein the hydrocarbon resin polymer comprises 10-75 mol% of the repeating units (C).

10. The hydrocarbon resin polymer of item 1, wherein a cross-linking degree of the repeating units (C) of the hydrocarbon resin polymer is 0.2-0.6.

11. The hydrocarbon resin polymer of item 1, wherein a hydrogen atom content in reactive double bonds in the hydrocarbon resin polymer is less than 10%.

12. The hydrocarbon resin polymer of item 1, wherein a number average molecular weight (Mn) of the hydrocarbon resin polymer is 2,500-10,000 g/mol.

13. A preparation method of a hydrocarbon resin polymer, comprising:

providing 15-50 mol% of bridged ring monomer compounds;

providing 38-80 mol% of monovinyl aromatic compounds;

providing 2-45 mol% of divinyl aromatic compounds; and

polymerizing the bridged ring monomer compounds, the monovinyl aromatic compounds, and the divinyl aromatic compounds to form the hydrocarbon resin polymer.

14. A resin composition, comprising:
a hydrocarbon resin polymer, the hydrocarbon resin polymer comprising:

0.15-15 mol% of repeating units (A), which are derived from bridged ring monomer compounds;

15-90 mol% of repeating units (B), which are derived from monovinyl aromatic compounds; and

8-80 mol% of repeating units (C), which are derived from divinyl aromatic compounds.

15. The resin composition of item 14, further comprising other resin polymers, and a weight ratio of the hydrocarbon resin polymer to the other resin polymers is 100-1:0-99.

16. The resin composition of item 15, wherein the other resin polymers comprise polyphenylene ether resins, polycarbonate resins, acrylic resins, epoxy resins, polyurethane resins, or any combination thereof .

17. The resin composition of item 14, further comprising an initiator, a crosslinking agent, an additive, or any combination thereof.

18. A substrate, comprising:
a hydrocarbon resin polymer, the hydrocarbon resin polymer comprising:

0.15-15 mol% of repeating units (A), which are derived from bridged ring monomer compounds;

15-90 mol% of repeating units (B), which are derived from monovinyl aromatic compounds; and

8-80 mol% of repeating units (C), which are derived from divinyl aromatic compounds.

19. The substrate of item 18, further comprising other resin polymers, and the weight ratio of the hydrocarbon resin polymer to the other resin polymers is 100-1:0-99.

20. The substrate of item 18, comprising:

a base;

a polymer layer disposed on the base; and

an adhesive layer disposed between the base and the polymer layer, wherein the polymer layer comprises the hydrocarbon resin polymer.

## Claims

1. A hydrocarbon resin polymer, comprising:

   0.15-15 mol% of repeating units (A), which are derived from bridged ring monomer compounds;
   15-90 mol% of repeating units (B), which are derived from monovinyl aromatic compounds; and
   8-80 mol% of repeating units (C), which are derived from divinyl aromatic compounds.

2. The hydrocarbon resin polymer as claimed in claim 1, wherein the bridged ring monomer compound comprises a bridged ring structure, and the bridged ring structure comprises 3-12 ring atoms and 1-2 double bonds.

3. The hydrocarbon resin polymer as claimed in claim 2, wherein at least one hydrogen atom on the bridged ring structure is substituted by at least one substituent selected from a group consisting of a $C_{1-20}$ alkyl group, a $C_{2-20}$ alkenyl group, and a carboxylate group having $C_{1-20}$ alkyl chain group.

4. The hydrocarbon resin polymer as claimed in claim 3, wherein at least two substituents are substituted by at least two substituents selected from a group consisting of a $C_{1-20}$ alkyl group, a $C_{2-20}$ alkenyl group, and a carboxylate group having $C_{1-20}$ alkyl chain group, and the at least two substituents together form a ring.

5. The hydrocarbon resin polymer as claimed in claim 1, wherein the bridged ring monomer compound is selected from a group consisting of a norbornene (NB), a dicyclopentadiene (DCPD), a dicycloheptadiene (NBD), a 2-acetyl-5-norbornene, a vinyl norbornene, and an ethylidene-norbornene.

6. The hydrocarbon resin polymer as claimed in at least one of claims 1 to 5, wherein a sum of the repeating units (A) and the repeating units (C) is greater than or equal to 13 mol%.

7. The hydrocarbon resin polymer as claimed in at least one of claims 1 to 6, wherein the hydrocarbon resin polymer comprises 3-12 mol% of the repeating units (A) and/or 25-85 mol% of the repeating units (B) and/or 10-75 mol% of the repeating units (C).

8. The hydrocarbon resin polymer as claimed in at least one of claims 1 to 7, wherein a cross-linking degree of the repeating units (C) of the hydrocarbon resin polymer is 0.2-0.6 and/or, wherein a hydrogen atom content in reactive double bonds in the hydrocarbon resin polymer is less than 10% and/or, wherein a number average molecular weight (Mn) of the hydrocarbon resin polymer is 2,500-10,000 g/mol.

9. A preparation method of a hydrocarbon resin polymer, comprising:

   providing 15-50 mol% of bridged ring monomer compounds;
   providing 38-80 mol% of monovinyl aromatic compounds;
   providing 2-45 mol% of divinyl aromatic compounds; and
   polymerizing the bridged ring monomer compounds, the monovinyl aromatic compounds, and the divinyl aromatic compounds to form the hydrocarbon resin polymer.

10. A resin composition, comprising:
    a hydrocarbon resin polymer, the hydrocarbon resin polymer comprising:

    0.15-15 mol% of repeating units (A), which are derived from bridged ring monomer compounds;
    15-90 mol% of repeating units (B), which are derived from monovinyl aromatic compounds; and
    8-80 mol% of repeating units (C), which are derived from divinyl aromatic compounds.

11. The resin composition as claimed in claim 10, further comprising other resin polymers, and a weight ratio of the hydrocarbon resin polymer to the other resin polymers is 100-1:0-99, wherein the other resin polymers optionally comprise polyphenylene ether resins, polycarbonate resins, acrylic resins, epoxy resins, polyurethane resins, or any combination thereof .

**12.** The resin composition as claimed in claim 11, further comprising an initiator, a crosslinking agent, an additive, or any combination thereof.

**13.** A substrate, comprising:
a hydrocarbon resin polymer, the hydrocarbon resin polymer comprising:

0.15-15 mol% of repeating units (A), which are derived from bridged ring monomer compounds;
15-90 mol% of repeating units (B), which are derived from monovinyl aromatic compounds; and
8-80 mol% of repeating units (C), which are derived from divinyl aromatic compounds.

**14.** The substrate as claimed in claim 13, further comprising other resin polymers, and the weight ratio of the hydrocarbon resin polymer to the other resin polymers is 100-1:0-99.

**15.** The substrate as claimed in at least one of claims 13 and 14, comprising:

a base;
a polymer layer disposed on the base; and
an adhesive layer disposed between the base and the polymer layer, wherein the polymer layer comprises the hydrocarbon resin polymer.

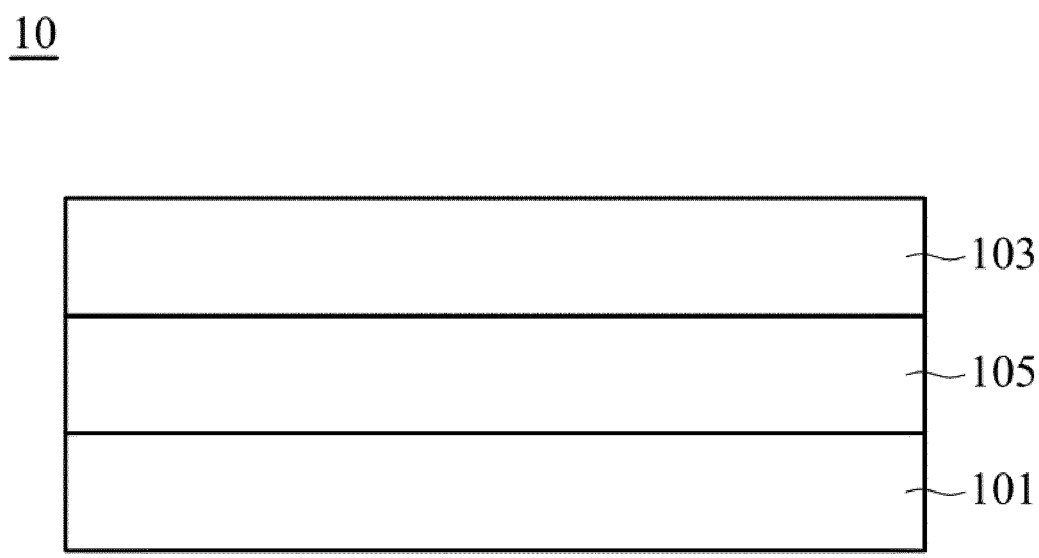


Figure 1

Europäisches Patentamt
European Patent Office
Office européen des brevets

# EUROPEAN SEARCH REPORT

Application Number
EP 23 16 5595

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/166649 A1 (NIPPON STEEL CHEMICAL & MAT CO LTD [JP]) 26 August 2021 (2021-08-26) * paragraph [0096] - paragraph [0097] * * claims * ----- | 1-15 | INV. C08F212/08 C08F212/12 C08F212/36 C08F232/04 C08F232/06 C09D125/08 C09D125/16 C09D145/00 ADD. B32B15/082 B32B27/30 B32B27/32 |

TECHNICAL FIELDS SEARCHED (IPC)

C08F
C09D
B32B

The present search report has been drawn up for all claims

1

| Place of search | Date of completion of the search | Examiner |
|---|---|---|
| Munich | 1 August 2023 | Friebe, Lars |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 16 5595

This annex lists the patent family members relating to the patent documents cited in the above-mentioned European search report. The members are as contained in the European Patent Office EDP file on The European Patent Office is in no way liable for these particulars which are merely given for the purpose of information.

01-08-2023

| Patent document cited in search report | Publication date | Patent family member(s) | Publication date |
|---|---|---|---|
| WO 2021166649 A1 | 26-08-2021 | JP WO2021166649 A1 | 26-08-2021 |
| | | TW 202136406 A | 01-10-2021 |
| | | WO 2021166649 A1 | 26-08-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 63330456 A
- TW 112102663